# EUROPÄISCHE PATENTSCHRIFT

(11) **EP 2 307 755 B1**
(45) Veröffentlichungstag und Bekanntmachung des Hinweises auf die Patenterteilung: **19.09.2012**
(21) Anmeldenummer: 09777446.7
(22) Anmeldetag: 27.07.2009
(51) Int. Cl.: F16D 65/56

(54) **NACHSTELLVORRICHTUNG FÜR EINE SCHEIBENBREMSE**
ADJUSTING DEVICE FOR A DISK BRAKE
DISPOSITIF D'AJUSTEMENT POUR FREIN À DISQUE

(30) Priorität: 30.07.2008 DE 102008035366
(43) Veröffentlichungstag der Anmeldung: 13.04.2011
(73) Patentinhaber: Knorr-Bremse Systeme für Nutzfahrzeuge GmbH, 80809 München (DE)
(72) Erfinder: IRASCHKO, Johann, 85301 Schweitenkirchen (DE); KEMPINGER, Georg, 85386 Eching (DE); ORGLER, Florian, 80335 München (DE)
(74) Vertreter: Mattusch, Gundula
(86) Internationale Anmeldenummer: PCT/EP2009/005411
(87) Internationale Veröffentlichungsnummer: WO 2010/012429

(56) Entgegenhaltungen:
- DE-A1- 3 341 059
- DE-A1- 3 621 712
- DE-A1-102004 037 771

## Beschreibung

Die Erfindung betrifft eine Nachstellvorrichtung für eine Scheibenbremse, insbesondere pneumatisch betätigte Scheibenbremse, nach dem Oberbegriff des Anspruchs 1.

Nachstellvorrichtungen für Scheibenbremsen gibt es in unterschiedlichen Ausführunggen. Aus der DE 10 2004 037 771 A1 ist eine Nachstellvorrichtung für eine Scheibenbremse bekannt, wobei hier auf diese Schrift vollinhaltlich Bezug genommen wird. Sie ist für eine pneumatisch betätigte Scheibenbremse, insbesondere in Schiebesattelausführung, geeignet. Weiterhin ist sie aber auch in pneumatisch betätigten Fest- oder Schwenksattelscheibenbremsen verwendbar.

Pneumatisch betätigte Scheibenbremsen gehören mittlerweile zur Standardausrüstung bei schweren Nutzfahrzeugen.

Derartige Scheibenbremsen benötigen zur Erzeugung der geforderten Zuspannkraft, eine mechanische Übersetzung, da die Kraft der pneumatisch beaufschlagten Bremszylinder wegen des Druckniveaus (derzeit ca. 10 bar) und der limitierten Baugröße der Bremszylinder beschränkt ist. Bei den derzeit bekannten pneumatisch betätigten Scheibenbremsen finden sich Übersetzungsverhältnisse zwischen 10:1 und 20:1. Die Kolbenhübe der Bremszylinder bewegen sich zwischen 50 und 75 mm, damit ergeben sich Zuspannwege zum Andrücken der Bremsbeläge an die Bremsscheibe von etwa 4 mm.

Die Reibmaterialdicke der Bremsbeläge liegt im Bereich von 20 mm, da 2 Beläge eingebaut sind ergibt sich somit, ohne Berücksichtigung des Scheibenverschleißes, ein Verschleißweg von etwa 40 mm. Dieser Weg ist um ein Vielfaches größer als der o. e. Zuspannweg. Es besteht daher die Notwendigkeit die Bremse mittels einer Vorrichtung, dem Belagverschleiß entsprechend, nachzustellen. Stand der Technik ist eine automatisch arbeitende Verschleißnachstellung, damit wird erreicht, dass das so genannte Lüftspiel, damit ist der Spalt zwischen den Bremsbelägen und der Bremsscheibe im unbetätigten Zustand gemeint, unabhängig vom Verschleißzustand und Verschleißverhalten der Bremsbeläge, konstant gehalten wird.

Sehr häufig findet man in Nutzfahrzeugen Scheibenbremsen, welche über einen Nachsteller verfügen, der konzentrisch im Hohlraum eines Gewindestempels angeordnet ist und exzentrisch über ein Antriebselement (zum Beispiel Schaltfinger oder Zahnrad) vom Bremshebel angetrieben wird. Bei einem Bremsvorgang führt der mit der Kolbenstange des Bremszylinders gekoppelte Bremshebel eine Drehbewegung aus. Bevor über den Koppelmechanismus der Nachstellung (zum Beispiel Schaltgabel und Schaltfinger oder Zahnrad) die Drehbewegung des Hebels in den Nachsteller eingeleitet wird, muss ein so genannter Leerweg überwunden werden. Dieser Weg ist für die Größe des so genannten Lüftspiels ausschlaggebend, da während dieser Bewegung die Nachstellung nicht aktiviert wird, und der Zuspannweg damit das Lüftspiel darstellt. Nach Überwinden dieses Leerwegs wird der Nachsteller in eine Drehbewegung versetzt, und durch die Koppelung mit dem Gewindestempel bzw. -rohr wird ein Nachstellvorgang eingeleitet.

Die DE 10 2004 037 711 A1 beschreibt einen solchen Nachsteller, der in Fig. 5 gezeigt ist. Er besteht im Wesentlichen aus folgenden Funktionselementen:
- Welle 2
- Lagerscheibe 3
- Axiallager 5
- Bundbuchse, bzw. Distanzhülse 19
- Schaltgabel, bzw. Antriebsring 6
- Kugelrampenkupplung 7
- Konuskupplung 17
- Zylinderfeder 12

Hinsichtlich der Beschreibung wird auf die DE 10 2004 037 711 A1 verwiesen.

Die Nachstellvorrichtung muss im Wesentlichen zwei Funktionen erfüllen:
1. die automatische Lüftspieleinstellung
2. die manuelle Rückstellung der Nachstellmechanik beim Erneuern der Bremsbeläge.

Beim Zurückdrehen wird die Nachstellvorrichtung per Hand mit einem Schraubenschlüssel von der so genannten Verschleißstellung in die Ausgangsstellung zurückgedreht. Hierbei muss die Nachstellvorrichtung gegen die Sperrrichtung des Freilaufs verdreht werden. Da der Freilauf aber eine 100%-ige Sperrwirkung besitzt, ist ein Zurückdrehen nicht ohne besondere konstruktive Maßnahmen möglich.

Die Aufgabe der vorliegenden Erfindung besteht daher darin, eine Nachstellvorrichtung mit verbesserte manueller Rückstellung bereitzustellen, wobei die obigen Nachteile entfallen bzw. bedeutend verringert und weitere Vorteile geschaffen sind.

Die Aufgabe wird durch eine Nachstellvorrichtung mit den Merkmalen des Anspruchs 1 gelöst.

Die Aufgabe wird auch durch eine Scheibenbremse mit den Merkmalen des Anspruchs 7 gelöst.

Demgemäß ist eine Nachstellvorrichtung zur Nachstellung eines Verschleißes von Bremsbelägen und Bremsscheibe einer pneumatisch betätigten Scheibenbremse mit einer drehhebelbetätigten Zuspannvorrichtung, die vorzugsweise in eine Stellspindel der Scheibenbremse einsetzbar und an einem Bremssattel der Scheibenbremse mittels einer Lagerscheibe anbringbar ist, wobei axial auf einer Seite eines Antriebsrings ein Axiallager und axial auf der gegenüberliegenden Seite des Antriebsrings eine Kugelrampenkupplung mit Freilauffunktion ausgebildet ist; die Kugelrampenkupplung Kugeln, eine axial zwischen dem Axiallager und ihren Kugeln antriebsseitig angeordneten Antriebsbuchse und einen abtriebsseitigen Kupplungsring aufweist, eine Konuskupplung zwischen dem abtriebsseitigen Kupplungsring und einer Federhülse für eine Zylinderfeder angeordnet ist, dadurch gekennzeichnet, dass der abtriebsseitige Kupplungsring für einen durch zumindest einen feststehenden Anschlag begrenzten Arbeitsdrehwinkel α_{A} ausgebildet ist.

Unter dem Arbeitsdrehwinkel ist der Drehwinkel zu verstehen, um welchen die Nachstellvorrichtung bei einem automatischen Nachstellvorgang während eines Bremsvorgangs verdreht wird.

Dadurch wird es erreicht, dass beim Zurückdrehen die Sperrwirkung des Freilaufs für diesen Betriebsfall aufgehoben wird, indem der abtriebsseitige Kupplungsring am Verdrehen gehindert wird, was durch einen feststehenden Anschlag möglich ist. Gleichzeitig wird ein begrenzter Arbeitsdrehwinkel geschaffen, der in entgegengesetzter Drehrichtung des abtriebsseitigen Kupplungsrings die automatische Nachstellung gestattet.

Diese Konstruktion bietet folgende Vorteile
- Relativ geringer Kraftaufwand beim manuellen Zurückdrehen, da keine Lastschaltkupplung überwunden werden muss.
- Keine zusätzlichen Bauteile für die Rückstellmechanik erforderlich
- Kostengünstige Herstellung durch spanlose Umformtechnik

Vorteilhafte Ausbildungen sind in den Unteransprüchen angegeben.

Bei dieser Nachstellvorrichtung ist eine, in axialer Richtung wirkende, Richtungskupplung eingebaut. Die Richtungskupplung wird gebildet aus einem Kugelrampensystem und einer Reibungskupplung, insbesondere einer Kugel-Konuskupplung.

Beim Zurückdrehen von Hand wird die Drehbewegung über die Welle und die Federhülse zunächst in die Kugel-Konuskupplung eingeleitet. Von da wird die Bewegung über den Reibschluss in der Kugel-Konuskupplung in die Kugelrampenkupplung geleitet. Da Kugel-Konus- und Kugelrampenkupplung auf Selbsthemmung abgestimmt sind, kommt es zur Klemmwirkung. Ein Zurückdrehen ist somit nicht ohne weiteres möglich. Um das Zurückdrehen zu ermöglichen ist es erforderlich die Klemmwirkung der Richtungskupplung zu eliminieren.

Wenn der abtriebsseitige Kupplungsring am Drehen gehindert wird, kann die Klemmwirkung des Freilaufsystems unterbunden werden. Die Bohrung des Kupplungsrings verfügt daher über eine Profilierung, mit deren Hilfe der Ring in der so genannten Ruhestellung des Nachstellers am Zurückdrehen gehindert wird. Die Abstützung des Kupplungsrings erfolgt an einem Anschlag, vorzugsweise an einem Anschlag der drehfest gelagerten Bundbuchse, welche eine zur Innenprofilierung des Kupplungsrings passende Außenprofilierung aufweist. Die beiden Profilierungen sind so aufeinander abgestimmt, dass der Kupplungsring den für den Arbeitsdrehwinkel notwendigen Freigang für die automatische Lüftspieleinstellung aufweist.

Damit die Klemmwirkung des Freilaufs in der Ruhestellung nicht auftritt, ist es sehr wichtig, dass die Bundbuchse und die über die Profilierung gekoppelte Kupplungsscheibe korrekt positioniert werden.

In einer bevorzugten Ausführung ist der Anschlag an einem Endabschnitt einer sich axial durch die Kugelrampenkupplung und den abtriebsseitigen Kupplungsring hindurch erstreckenden Bundbuchse angeformt, deren anderes Ende einen Bund aufweist, der einen feststehenden Abschnitt des Axiallagers bildet. Dadurch wird ein Bauteil mit Mehrfachfunktionen geschaffen, welches die Teilevielfalt vermindert und den Zusammenbau erleichtert.

Es ist weiterhin bevorzugt, dass das andere Ende der Bundbuchse, welches den feststehenden Abschnitt des Axiallagers bildet, an der an dem Bremssattel angebrachten Lagerscheibe drehfest befestigt ist.

Die Konuskupplung ist vorzugsweise eine Kugel-Konuskupplung, welche den abtriebsseitigen Kupplungsring und eine mit der Federhülse verbundene Kegelbuchse aufweist, und zwischen dem abtriebsseitigen Kupplungsring und der Kegelbuchse Klemmkugeln angeordnet sind.

Das Axiallager ist durch die eine Seite des Antriebsrings, Wälzkörper und einen Bund einer Bundbuchse, welche sich axial durch die Kugelrampenkupplung hindurch erstreckt, ausgebildet. Damit wird ebenfalls eine Teilevielfalt reduziert und ein kompakter Aufbau erzielt.

Eine Scheibenbremse, insbesondere pneumatisch betätigte Scheibenbremse, weist eine Nachstellvorrichtung nach der oben stehenden Beschreibung auf.

Die Erfindung wird nun anhand einer beispielhaften Ausführung mit Bezug auf die beigefügten Zeichnungen näher erläutert. Hierbei zeigen:
- Fig. 1: eine Teilschnittdarstellung einer beispielhaften Ausführung einer erfindungsgemäßen Nachstellvorrichtung;
- Fig. 2: eine vergrößerte Teilschnittdarstellung des oberen Bereiches nach Fig. 1;
- Fig. 3: eine perspektivische Teilschnittansicht der beispielhaften Ausführung nach Fig.1;
- Fig. 4: eine vergrößerte perspektivische Teilschnittansicht längs X-X im Bereich eines Kupplungsrings nach Fig. 2;
- Fig. 5: eine Teilschnittdarstellung einer Nachstellvorrichtung nach dem Stand der Technik; und
- Fig. 6: eine schematische Darstellung einer Scheibenbremse.

Elemente mit gleichen oder ähnlichen Funktionen sind in den Figuren mit gleichen Bezugszeichen versehen.

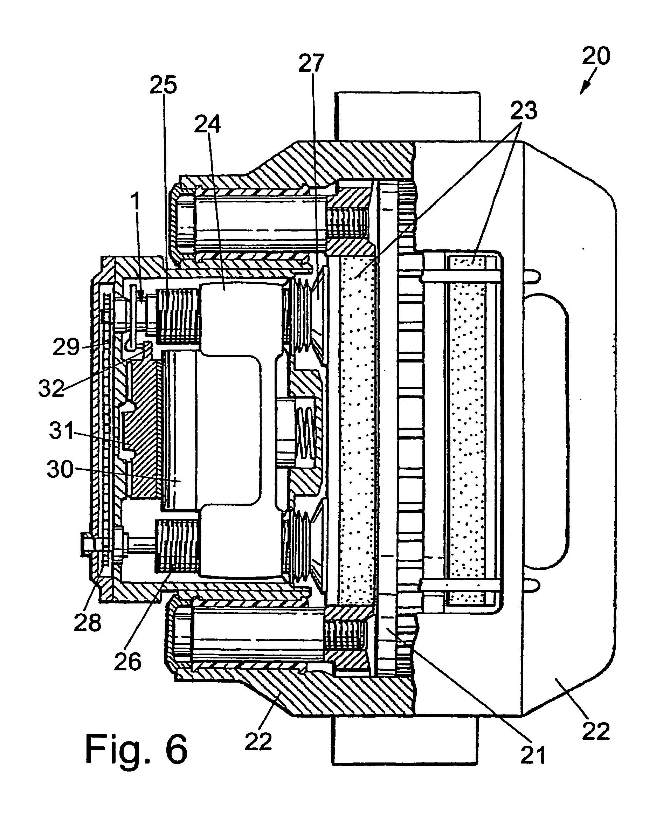

Zu Aufbau und Funktion einer pneumatischen Scheibenbremse nach Fig. 6 wird auf die entsprechende Beschreibung der DE 197 29 024 C1 verwiesen. In der Fig. 6 sind die folgenden Komponenten angegeben: Scheibenbremse 20, Bremsscheibe 21, Bremssattel 22, Bremsbeläge 23, Traverse 24, Stellspindeln 25 und 26, Druckstücke 27, Kettenräder 28, Kette 29, Exzenter 30 und Drehhebel 31, welcher ein Antriebselement 32 aufweist, das mit einer Schaltgabel einer Nachstellvorrichtung 1 in Zusammenwirkung steht. Die Nachstellvorrichtung 1 ist hier in der Stellspindel 25 angeordnet. Eine derartige Nachstellvorrichtung 1 wird nun näher erläutert. Die Nachstellvorrichtung 1 wäre auch für eine elektromotorisch betätigte Scheibenbremse geeignet.

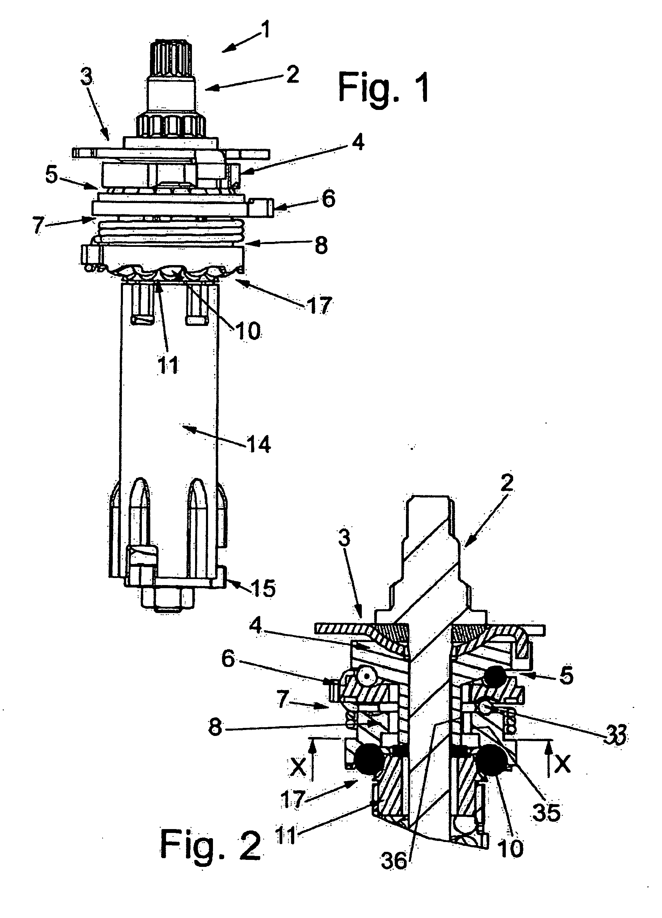

Dazu wird Bezug auf Fig. 1, 2 und 3 genommen.

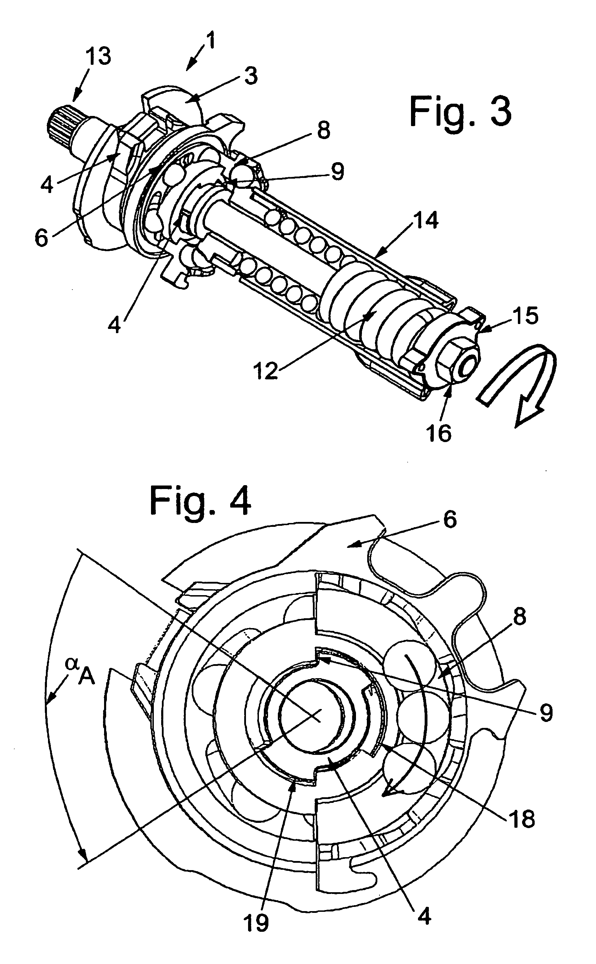

Fig. 1 ist eine Teilschnittdarstellung einer beispielhaften Ausführung einer erfindungsgemäßen Nachstellvorrichtung 1. Eine vergrößerte Teilschnittdarstellung des oberen Bereiches nach Fig. 1 illustriert Fig. 2, und Fig. 3 zeigt eine perspektivische Teilschnittansicht der beispielhaften Ausführung nach Fig. 1.

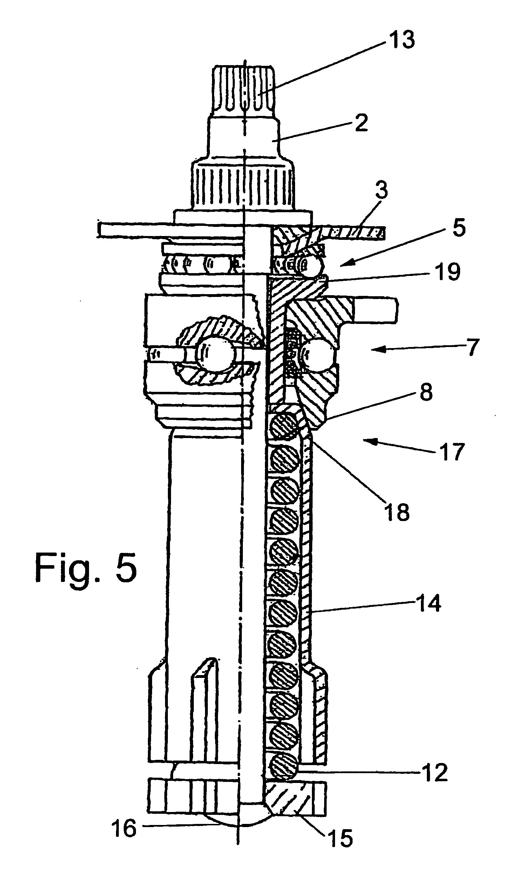

Die Nachstellvorrichtung 1 weist Folgendes auf: eine Welle 2, mit einem Antriebszapfen an ihrem oberen Ende; eine Lagerscheibe 3 zur Befestigung der Nachstellvorrichtung 1 im Bremssattel 22 (siehe Fig. 6); eine Bundbuchse 4, die verdrehsicher mit der Lagerscheibe 3 gekoppelt ist und einen oberen Bund mit einer darunter angeordneten Lauffläche für Kugeln eines Axiallagers 5 aufweist; einen Antriebsring 6, der mit einer Schaltgabel verbunden ist, die mit dem Antriebselement 32 (siehe Fig. 6) des Drehhebels 31 gekoppelt ist; eine Kugelrampenkupplung 7, mit einem Kupplungsring 8, welcher mit einer Kegelbuchse 11 zusammenwirkt, die mit einer Federhülse 14 drehfest verbunden ist; eine Zylinderfeder 12, die in der Federhülse 14 angeordnet ist und sich auf einer Profilscheibe 15 abstützt; und ein Einstellelement 16, zum Beispiel eine Mutter, die auf dem unteren Ende der Welle 2 angeordnet ist und zum Spannen der Zylinderfeder 12 und zum axialen Zusammenhalt der Elemente der Nachstellvorrichtung 1 dient. Die Kugelrampenkupplung 7 besteht aus einer Antriebbuchse 33, welche ein unterer Abschnitt des Antriebsrings 6 ist, Kugeln bzw. Wälzkörpern und dem Kupplungsring 8, wobei der Kupplungsring 8 einen oberen Abschnitt zur Aufnahme der Kugeln und einen unteren Abschnitt aufweist, der einen Teil der Konuskupplung 17 bildet. Die allgemeine Funktion der Nachstellvorrichtung 1 wird in DE 10 2004 037 771 A1 mit Bezug auf Fig. 5 ausführlich beschrieben, worauf hier verwiesen wird.

Als ein erster Unterschied zu der Nachstellvorrichtung nach Fig. 5 ist bei der Nachstellvorrichtung 1 gemäß der vorliegenden Erfindung das Axiallager 2 aus dem Bund der Bundbuchse 4, einer Seite des Antriebsrings 4 und Wälzkörpern gebildet. Das untere Ende der sich durch die Kugelrampenkupplung 7 hindurch erstreckenden Bundbuchse 4 bildet direkt oder über eine Druckscheibe einen axialen Anschlag für die Kegelbuchse 9. Die Kegelbuchse 11 wird über die Federhülse 14 von der Zylinderfeder 12 nach oben gepresst, wobei die Komponenten Konuskupplung 17, Kugelrampenkupplung 7 und Axiallager 5 axial zusammengehalten und zusammengedrückt werden.

Die Bundbuchse 4 mit ihrem Anschlag dient dazu, ein Minimalspiel der Lagerungen beizubehalten.

Ein bedeutender Unterschied zum Stand der Technik besteht darin, dass der abtriebsseitige Kupplungsring 8 nur einen begrenzten Drehwinkel, nämlich einen begrenzten Arbeitsdrehwinkel α_{A} aufweist, der in Fig. 4 noch näher erläutert wird.

Ein Rückstellvorgang der Nachstellvorrichtung 1 wird nun anhand von Fig.1 - 3 erläutert.

Die Welle 2 weist an ihrem linken Ende in Fig. 3 einen Antriebszapfen 13 auf, welcher für einen korrespondieren Schlüssel zum Beispiel eine Sechskantprofilierung aufweist. Mit einem darauf angesetzten Werkzeug, zum Beispiel ein gekröpfter Ringschlüssel, wird die Welle 2 nun in Richtung des gezeigten Pfeils im Uhrzeigersinn verdreht. Dabei wird die Drehbewegung über die Welle 2 und die Federhülse 14 in die Konuskupplung 17 eingeleitet. Das heißt, über die Kegelbuchse 11 in die Klemmkugeln 10, und von diesen in den abtriebsseitigen Kupplungsring 8. Dieser liegt in seiner Ruhestellung, das heißt in der Stellung, in welcher keine automatische Nachstellung erfolgt, an einem feststehenden Anschlag 9 (Fig. 4) an und kann sich nicht weiter mitdrehen. Insofern kann dieser dadurch an einer Drehung gehinderte Kupplungsring 8 keine Drehung auf die Kugelrampenkupplung 7 übertragen, welche somit auch nicht in eine Übertragungsstellung verstellt wird. Dadurch kann das durch den Ringschlüssel auf die Welle 2 eingeleitete Drehmoment die Federhülse 14 weiter verdrehen und diese Drehbewegung auf die (nicht gezeigte) Stellspindel 25 zur Rückstellung übertragen.

Der Bereich des Anschlags 9 ist in Fig. 4 in einer vergrößerten Teilschnittansicht (Linie X-X nach Fig. 2 im Bereich des Kupplungsrings 8) gezeigt. Die Bundbuchse 4 weist ein verlängertes unteres Ende (Fig. 2) auf, welches sich durch die Kugelrampenkupplung 7 axial in den Kupplungsring 7 hinein erstreckt und in diesem Bereich mit einem Außenprofil 36 versehen ist. Dieses Außenprofil erstreckt sich radial nach außen und ist zum Beispiel in der Gestalt eines Kreisausschnitts ausgebildet. Die Außenprofilierung 36 ist symmetrisch angeordnet und wirkt mit einer korrespondierenden Innenprofilierung 35 des umgebenden Kupplungsrings 8 zusammen. Dabei sind Zwischenräume am Kreisumfang des Innenprofils 35 und Außenprofils 36 angeordnet, welche den Arbeitsdrehwinkel α_{A} festlegen. Der Kupplungsring 8 kann sich somit um den von den Profilierungen 35 und 36 festgelegten Arbeitsdrehwinkel α_{A} bei einer automatischen Nachstellung verdrehen. Bei einer entgegengesetzten Rückstellung bildet das Außenprofil 36 der Bundbuchse 4 jedoch den Anschlag 9, welcher eine Drehbewegung des Kupplungsrings 8, angetrieben durch einen Rückstellschlüssel, verhindert.

Die Arretierung der Bundbuchse 4 ist in diesem Beispiel über die an dem Bremssattel 22 befestigte Lagerscheibe 3 ausgeführt, indem umgebogene Laschen der Lagerscheibe 3 in radiale Ausnehmungen am Umfang des Bundes der Bundbuchse 4 eingreifen.

Die Erfindung ist nicht auf die oben beschriebenen Ausführungsbeispiele beschränkt. Sie ist im Rahmen der beigefügten Ansprüche modifizierbar.

So kann zum Beispiel die Arretierung der Bundbuchse 4 direkt am Bremssattel 22, zum Beispiel über Nocken und korrespondierende Ausnehmungen im Bremssattel 22 erfolgen.

Weiterhin können die Innen- und Außenprofile 35, 36 andere Formen aufweisen.

### Bezugszeichenliste

- 1: Nachstellvorrichtung
- 2: Welle
- 3: Lagerscheibe
- 4: Bundbuchse
- 5: Axiallager
- 6: Antriebsring
- 7: Kugelrampenkupplung
- 8: Kupplungsring
- 9: Anschlag
- 10: Klemmkugel
- 11: Kegelbuchse
- 12: Zylinderfeder
- 13: Antriebszapfen
- 14: Federhülse
- 15: Profilscheibe
- 16: Einstellelement
- 17: Konuskupplung
- 18: Hülsenkonus
- 19: Distanzhülse
- 20: Scheibenbremse
- 21: Bremsscheibe
- 22: Bremssattel
- 23: Bremsbeläge
- 24: Traverse
- 25: Erste Stellspindel
- 26: Zweite Stellspindel
- 27: Druckstück
- 28: Kettenräder
- 29: Kette
- 30: Exzenter
- 31: Drehhebel
- 32: Antriebselement
- 33: Antriebbuchse
- 35: Innenprofil
- 36: Außenprofil
- α_{A}: Arbeitsdrehwinkel

## Patentansprüche

1. Nachstellvorrichtung (1) zur Nachstellung eines Verschleißes von Bremsbelägen (23) und Bremsscheibe (21) einer pneumatisch betätigten Scheibenbremse (20) mit einer drehhebelbetätigten Zuspannvorrichtung, die vorzugsweise in eine Stellspindel (25) der Scheibenbremse (20) einsetzbar und an einem Bremssattel (22) der Scheibenbremse (20) mittels einer Lagerscheibe (3) anbringbar ist, wobei
(a) axial auf einer Seite eines Antriebsrings (6) ein Axiallager (5) und axial auf der gegenüberliegenden Seite des Antriebsrings (6) eine Kugelrampenkupplung (7) mit Freilauffunktion ausgebildet ist;
(b) die Kugelrampenkupplung (7) Kugeln, eine axial zwischen dem Axiallager (5) und ihren Kugeln antriebsseitig angeordnete Antriebsbuchse (33) und einen abtriebsseitigen Kupplungsring (8) aufweist,
(c) eine Konuskupplung (17) zwischen dem abtriebsseitigen Kupplungsring (8) und einer Federhülse (14) für eine Zylinderfeder (12) angeordnet ist,
**dadurch gekennzeichnet, dass**
(d) der abtriebsseitige Kupplungsring (8) für einen durch zumindest einen feststehenden Anschlag (9) begrenzten Arbeitsdrehwinkel (α_{A}) ausgebildet ist.

2. Nachstellvorrichtung (1) nach Anspruch 1, **dadurch gekennzeichnet, dass** der Anschlag (9) an einem Endabschnitt einer sich axial durch die Kugelrampenkupplung (7) und den abtriebsseitigen Kupplungsring (8) hindurch erstreckenden Bundbuchse (4) angeformt ist, deren anderes Ende einen Bund aufweist, der einen feststehenden Abschnitt des Axiallagers (5) bildet.

3. Nachstellvorrichtung (1) nach Anspruch 2, **dadurch gekennzeichnet, dass** der Anschlag (9) durch ein Außenprofil (36) gebildet ist, welches in ein Innenprofil (35) des abtriebsseitigen Kupplungsrings (8) eingreift und mit diesem zusammenwirkt.

4. Nachstellvorrichtung (1) nach Anspruch 3, **dadurch gekennzeichnet, dass** das Innenprofil (35) des abtriebsseitigen Kupplungsrings (8) und das Außenprofil (36) zur Bildung des begrenzten Arbeitsdrehwinkels (α_{A}) des abtriebsseitigen Kupplungsrings (8) ausgebildet sind.

5. Nachstellvorrichtung (1) nach einem der Ansprüche 2 bis 4, **dadurch gekennzeichnet, dass** das andere Ende der Bundbuchse (4), welches den feststehenden Abschnitt des Axiallagers (5) bildet, an der an dem Bremssattel (22) angebrachten Lagerscheibe (3) drehfest befestigt ist.

6. Nachstellvorrichtung (1) nach einem der vorhergehenden Ansprüche, **dadurch gekennzeichnet, dass** die Konuskupplung (17) eine Kugel-Konuskupplung ist, welche den abtriebsseitigen Kupplungsring (8) und eine mit der Federhülse (14) verbundene Kegelbuchse (11) aufweist, und zwischen dem abtriebsseitigen Kupplungsring (8) und der Kegelbuchse (11) Klemmkugeln (10) angeordnet sind.

7. Scheibenbremse (20), insbesondere pneumatisch betätigte Scheibenbremse, mit einer Nachstellvorrichtung (1) nach einem der vorhergehenden Ansprüche.

## Claims

1. An adjusting device (1) for adjusting for wear of the brake linings (23) and the brake disk (21) of a pneumatically actuated disk brake (20) having a rotary-lever-actuated brake application device, which adjusting device can preferably be inserted into a control spindle (25) of the disk brake (20) and attached to a brake calliper (22) of the disk brake (20) by means of a bearing disk (3), wherein
(a) an axial bearing (5) is formed axially on one side of a drive ring (6) and a ball ramp clutch (7) with freewheel function is formed axially on the opposite side of the drive ring (6);
(b) the ball ramp clutch (7) has balls, a drive bush (33) arranged at the drive input side axially between the axial bearing (5) and the balls thereof and a drive-output-side clutch ring (8),
(c) a cone clutch (17) is arranged between the drive-output-side clutch ring (8) and a spring sleeve (14) for a cylindrical spring (12),
**characterised in that**
(d) the drive-output-side clutch ring (8) is designed for a working angle of rotation (α_{A}) limited by at least one stationary stop (9).

2. The adjusting device (1) as claimed in claim 1, **characterised in that** the stop (9) is integrally formed on one end section of a collar bush (4) which extends axially through the ball ramp clutch (7) and the drive-output-side clutch ring (8), the other end of which collar bush (4) has a collar which forms a stationary section of the axial bearing (5).

3. The adjusting device (1) as claimed in claim 2, **characterised in that** the stop (9) is formed by an external profile (36) which engages into and interacts with an internal profile (35) of the drive-output-side clutch ring (8).

4. The adjusting device (1) as claimed in claim 3, **characterised in that** the internal profile (35) of the drive-output-side clutch ring (8) and the external profile (36) are designed to form the limited working angle of rotation (α_{A}) of the drive-output-side clutch ring (8).

5. The adjusting device (1) as claimed in one of claims 2 to 4, **characterised in that** the other end of the collar bush (4), which end forms the stationary section of the axial bearing (5), is fastened in a rotationally fixed manner to the bearing disk (3) which is attached to the brake calliper (22).

6. The adjusting device (1) as claimed in one of the preceding claims, **characterised in that** the cone clutch (17) is a ball-cone clutch which has the drive-output-side clutch ring (8) and a tapered bush (11) which is connected to the spring sleeve (14), and clamping balls (10) are arranged between the drive-output-side clutch ring (8) and the tapered bush (11).

7. A disk brake (20), in particular pneumatically actuated disk brake, having an adjusting device (1) as claimed in one of the preceding claims.

## Revendications

1. Dispositif (1) de rattrapage de jeu pour le rattrapage de jeu d'une usure de garniture (23) de frein et de disque (21) de frein d'un frein (20) à disque actionné pneumatiquement, comprenant un dispositif de serrage, qui est actionné par un levier tournant, qui peut être inséré, de préférence, dans une broche (25) de réglage du frein (20) à disque et qui peut être appliqué à un étrier (22) du frein (20) à disque au moyen d'un flasque (3), dans lequel
(a) il est formé axialement d'un côté d'un anneau (6) d'entraînement un palier (5) axial et axialement du côté opposé de l'anneau (6) d'entraînement un accouplement (7) à rampe à billes à fonction de roue libre,
(b) l'accouplement (7) à rampe à billes a des billes, une douille (33) d'entraînement disposée axialement du côté de l'entraînement entre le palier (5) axial et ces billes et un anneau (8) d'accouplement du côté de la sortie,
(c) un accouplement (17) à cône est monté entre l'anneau (8) d'accouplement du côté de la sortie et un manchon (14) pour un ressort (12) cylindrique,
**caractérisé en ce que**
(d) l'anneau (8) d'accouplement du côté de la sortie est constitué pour un angle (α_{A}) de rotation de travail limité par au moins une butée (9) fixe.

2. Dispositif (1) de rattrapage de jeu suivant la revendication 1, **caractérisé en ce que** la butée (9) est formée sur une partie d'extrémité d'une douille (4) à collet s'étendant à travers l'accouplement (7) à rampe à billes et l'anneau (8) d'accouplement du côté de la sortie, douille (4) à collet dont l'autre extrémité comporte un collet, qui forme une partie fixe du palier (5) axial.

3. Dispositif (1) de rattrapage de jeu suivant la revendication 2, **caractérisé en ce que** la butée (9) est formée par un profil (36) extérieur, qui pénètre dans un profil (35) intérieur de l'anneau (8) d'accouplement du côté de la sortie et coopère avec celui-ci.

4. Dispositif (1) de rattrapage de jeu suivant la revendication 3, **caractérisé en ce que** le profil (35) intérieur de l'anneau (8) d'accouplement du côté de la sortie et le profil (36) extérieur sont constitués pour la formation de l'angle (α_{A}) de rotation de travail limité de l'anneau (8) d'accouplement du côté de la sortie.

5. Dispositif (1) de rattrapage de jeu suivant l'une des revendications 2 à 4, **caractérisé en ce que** l'autre extrémité de la douille (4) à collet, qui forme la partie fixe du palier (5) axial, est solidaire en rotation du flasque (3) mis sur l'étrier (22) de frein.

6. Dispositif (1) de rattrapage de jeu suivant l'une des revendications précédentes, **caractérisé en ce que** l'accouplement (17) conique est un accouplement conique à billes, qui comporte l'anneau (8) d'accouplement du côté de la sortie et une douille (11) conique reliée au manchon (14) de ressort et des billes (10) de serrage sont disposées entre l'anneau (8) d'accouplement du côté de la sortie et la douille (11) conique.

7. Frein (20) à disque, notamment frein à disque actionné pneumatiquement, ayant un dispositif (1) de rattrapage du jeu suivant l'une des revendications précédentes.
